(19) Europäisches Patentamt
European Patent Office
Office européen des brevets

(11) Publication number: **0 137 829**
**B1**

(12) **EUROPEAN PATENT SPECIFICATION**

(45) Date of publication of patent specification: **22.06.88**

(51) Int. Cl.$^4$: **B 32 B 27/04,** B 32 B 29/00, B 32 B 29/06

(21) Application number: **84901182.0**

(22) Date of filing: **26.03.84**

(86) International application number: **PCT/AU84/00050**

(87) International publication number: **WO 84/03859 11.10.84 Gazette 84/24**

(54) **PRODUCTION OF LAMINATES.**

(30) Priority: **28.03.83 AU 8651/83**
**28.03.83 AU 8653/83**

(43) Date of publication of application:
**24.04.85 Bulletin 85/17**

(45) Publication of the grant of the patent:
**22.06.88 Bulletin 88/25**

(84) Designated Contracting States:
**AT BE CH DE FR GB LI SE**

(56) References cited:
**EP-A-0 122 396**
**FR-A-2 310 872**
**GB-A-1 317 427**
**GB-A-1 455 461**
**US-A-3 434 992**
**US-A-3 928 706**
**US-A-3 949 133**
**US-A-4 006 048**
**US-A-4 044 185**
**CHEMICAL ABSTRACTS, vol. 92, no. 22, June 2, 1980, page 45, abstract 182272v, Columbus, Ohio, US; & JP - A - 80 04 829 (HITACHI CHEMICAL CO.) 14-01-1980**

(73) Proprietor: **ACI AUSTRALIA LIMITED**
**Level 31 200 Queen Street**
**Melbourne, VIC 3000 (AU)**

(72) Inventor: **TIVENDALE, John, Angus**
**16 Goff Street**
**Beaconsfield, VIC 3807 (AU)**
Inventor: **LAWRENCE, James, Albert**
**12 Lincoln Parase**
**Aspendale, VIC 3195 (AU)**

(74) Representative: **Crampton, Keith John Allen et al**
**D YOUNG & CO 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the manufacture of bonded products, particularly of the kind traditionally made by the bonding of cellulosic material using heat-cured resins under pressure.

Phenoplast resins are used as binding resins for cellulosic materials, such as paper, wood chips and wood fibres. Phenoplast resins are relatively inexpensive resins and are readily available. They provide a degree of resilience and water resistance.

However phenoplast resins are slow in heat curing and this substantially restricts the manufacturing processes in which they are used. The curing is too slow to permit continuous production. Further, the phenoplast resins are cured in alkaline conditions. When laminates of materials bound with phenoplast resins are made with materials bound with aminoplast resins (which are cured in acid conditions) bonding weaknesses may result due to a conflict in curing conditions at the interface.

In the manufacture of laminates it is common practice to impregnate papers with low-molecular-weight polymers such as a low-molecular-weight phenoplast polymer to provide a base sheet and to impregnate a decorative sheet of paper with low-molecular-weight aminoplast resin such as a melamine formaldehyde resin. The impregnated papers are then pressed together and heated to cure the resins and to bond the layers together. In general period of say from one to two hours or so is required in this pressing operation depending on the number of sheets pressed in one press opening. It has meant that it is usually necessary to produce the product in a batch process.

In one common laminating procedure for example there is provided a layer of Kraft quality paper impregnated with a resin such as phenolformaldehyde resin. This provides strength to the laminate. This layer is laminated with a decorative grade paper impregnated with an aminoplast resin such as a melamine-formaldehyde or ureaformaldehyde. Pressing to laminate these materials takes in the order of from one to two hours or so depending on the number of sheets in the press opening which is the time taken for the resin to cure to a sufficient extent. Generally, curing agents are used. Aminoplast resins cure best in acid conditions and acid-donor curing agents are used for this purpose. Phenoplast resins and like condensation polymers cure best in alkaline conditions and so acid-receptor or alkaline curing agents such as sodium hydroxide and calcium hydroxide are used for this purpose.

Curing laminates of paper impregnated with a polymer that cures in acid conditions with paper impregnated with a polymer that cures in alkaline conditions creates a problem at the interface of the layers. There is a tendency for the layers to peel apart or to suffer other unacceptable defects such as blistering or lack of strength.

Patent Specification US—A—3 434 992 is concerned with the problems involved in curing mixtures of aminoplast and phenolplast resins but it does not appreciate that phenolic resins can be cured under acid conditions and does not address the problem of laminating an aminoplast and a phenolplast resin.

The present invention results from the discovery that the speed of the curing of phenoplast resins can be increased dramatically and acid donor curing agents used when an aminoplast resin is mixed with the phenoplast resin prior to impregnation. Accordingly, the present invention provides a method for the continuous production of laminates comprising impregnating one or more base sheet materials with a mixture containing 20 to 55 parts by weight of one or more aminoplast resins to 100 parts by weight of one or more phenolplast resins in the presence of one or more acid donor curing agents in an amount of at least 1% by weight of the said mixture, impregnating one or more continuous decorative sheet materials with one or more aminoplast resins containing one or more acid donor during agents, and pressing together the decorative and base sheet materials at an elevated curing temperature in order to rapidly cure the resins and form an integral laminate structure.

By an aminoplast resin as used herein is meant a resin made by the reaction of a compound containing an amide or amino group with an aldehyde. Formaldehyde is the common aldehyde used. Common compounds including an amide or amino groups are the amines such as urea, thiourea, ethylene urea, melamine dicyandiamide, benzoguanamine, aceto-guanamine and the like. Aminoplast resins are used because they are normally light in color and can form relatively clear films thereby displaying the quality of the material in which they are impregnated and to produce materials having a light color appearance. However aminoplast resins are relatively expensive and if used to make the entire product are too brittle.

By the term phenoplast resin as used herein is meant a resin that is the condensation product of a compound containing an hydroxyl group with an aldehyde. Formaldehyde is the common aldehyde used although furfural and other aldehydes may be used as desired. The phenols are the most common hydroxyl containing compounds and include phenol, the cresols, the xylenols, resorcinol, naphthols, and naturally occurring phenols such as tannins and related substances.

Any suitable phenoplast and aminoplast resins can be used in accordance with the present invention. However in most cases phenol formaldehyde will provide a satisfactory phenoplast resin and melamine formaldehyde or urea formaldehyde will provide a satisfactory aminoplast resin.

The phenolplast resin may be prepared in any suitable manner preferably by reacting a phenol with a molar excess of formaldehyde in the presence of catalytic quantities of alkali.

The aminoplast resin such as melamine formaldehyde may be prepared by reacting melamine and formaldehyde in the presence of an alkali such as sodium hydroxide. A molar excess of formaldehyde is preferably used.

The phenoplast resins are modified by blending in amounts of the aminoplast resin. It is understood that under curing conditions the methylol groups of the phenoplast resin react with the amino or amide groups in the aminoplast resin under acid conditions and that this substantially increases the rate of cure when compared with the rate of cure of a phenoplast resin.

The relative amounts of phenoplast and aminoplast resins may be varied to suit the requirements of the product to be made and the speed at which the process is to be operated. From 20 to 55 parts of melamine resin is used for each 100 parts by weight of phenoplast resin.

The acid donor curing agents that may be used in accordance with the present invention include acid salts and free acids for example. Preferably the acid donor curing agents are compounds that release acid under curing conditions. For example they may be compounds that react with formaldehyde under curing temperatures to release free acid.

The acid may be weak acid to produce for example a pH of less than 5 and preferably about 3 under the curing conditions. Suitable acid salts include those based on ammonia, amines, substituted amines or other chemical entities which react with formaldehyde in the resin to liberate the acid component. The salt may be a chloride sulphate, acetate, formate or sulphonate salt for example. A particularly useful example of an acid during agent is ammonium chloride. Suitable free acids include benzoic acid, acetic acid and the like.

It will be appreciated that, when an acid donor curing agent is used that does not become activated until a curing temperature is reached, it is possible to minimize premature cross-linking of the aminoplast and phenoplast resins until the curing pressure and temperature are applied. This means that the resin is able to flow satisfactorily and the treated papers have a better storage life.

Thus the present invention provides a superior method for the manufacture of building-board products. The curing rate of phenoplast resins may be improved to from 30 to 80 seconds at a temperature from 110°C to 200°C, preferably above 135°C and particularly about 170°C to 190°C, and pressure of 10 to 30 kg/sq cm (1 to 3 MPa) preferably 15 to 20 kg/sq cm (1.5 to 2 MPa). Higher curing pressures may be employed in which case the curing times may be further reduced or alternatively lower temperatures used as may be desired. Acid donor catalysts are used and the resin mixture is compatible with and may be laminated to products containing acid-donor-catalysed resins. The laminated papers of one aspect of the present invention may include from about 25 to 50% by weight of resin. At lower pressures the resin content may be in the order of 40 to 50% by weight. At higher laminating pressure this may be reduced to about 25%. The impregnated papers may be laminated with other support material as is known in the art to produce commercial decorative laminates. In view of the short curing times, continuous manufacture of laminated products is possible using equipment known in the art. The thickness of the laminates may be 0.3 to 2.0 mm, for example.

The present invention will be further described with reference to the examples that follow. It should be appreciated that the detail given in these examples is not to be taken as restricting the present invention.

Example 1

A phenolic resin was preferred by mixing the following:

| | |
|---|---|
| 37% formaldehyde | 1900 litres |
| 88% phenol | 1380 litres |
| sodium hydroxide | 13 kgm |

The mixture was heated at a temperature of 85°C for 2 hours, cooled and adjusted to a solids content of 50% by weight with water.

A melamine formaldehyde resin was prepared by mixing the following:

| | |
|---|---|
| 37% formaldehyde | 1365 litres |
| sodium hydroxide to a pH of 9 | |
| melamine | 1300 kgm |

The mixture was heated to 95°C. After about 1½ hours the reaction was discontinued, 180 litres of ethyl alcohol added and the solids content adjusted to 50% by weight with water.

100 parts by weight of the phenol formaldehyde resin was mixed with 50 parts by weight of the melamine formaldehyde resin. Ammonium chloride was added in an amount of about 3% by weight, as a 25% solution in water. This resin mixture was used to impregnate a continuous 215 gram Kraft paper in a Vits impregnator to a resin content of 42%.

Melamine formaldehyde and ammonium chloride acide donor curing agent was used to impregnate 80 to 130 gram continuous decorative paper to resin content of 65%.

The papers were brought together in a continuous laminator at a pressure of 15 kg/cm$^2$ (1.5 MPa) and temperature of 185°C. The output rate was adjusted to between 6 to 8 metres per minute to produce a laminate of 0.6 to 0.8 mm.

The product was satisfactory in strength, characteristics and appearance. Stroke cure of the resin was less than 20 seconds.

This example was repeated to determine stroke cure at different curing temperatures. Figure 1 shows the results.

The example was repeated using different amounts of melamine resin and different amounts of hardener. Figure 2 shows the stroke cure rate in seconds for varying amounts of hardener, and at melamine resin contents of 50 parts by weight, 25 parts by weight, 10 parts by weight and for phenol formaldehyde alone. Curing temperature was 135°C.

Thus, in accordance with the present invention the curing rate of the phenolic resin, normally in the order of about 15 to 30 minutes is reduced to below 80 seconds. Thus, it is possible to laminate in continuous presses. The base layers and decorative layers are compatible. The acid donor curing agent used is not activated until the impregnated paper is heated, avoiding premature curing and ensuring proper penetration of the papers and bonding of the papers.

Example 2

A 215 gram Kraft paper was impregnated with a resin mixture as in Example I. The impregnated paper was placed on a core of standard particle board.

A decorative paper was impregnated with melamine formaldehyde resin and curing agent as in example I and this was layed over the Kraft paper layer.

The laminate was pressed together at 20 kgm/sq cm for 80 seconds at 170°C. The appearance was very smooth. The experiment was repeated without the use of the Kraft paper layer. It was noted that there were irregularities showing in the surface.

Each of the samples was subjected to treatment with steam over an extended period. It was observed that in the board not having the Kraft paper layer the surface showed signs of lumpiness due to swelling of the chips after 15 minutes. The board having the Kraft paper layer did not show these signs for a further 15 minutes of continuous steam treatment.

Example 3

Example 1 was repeated using urea formaldehyde resin in place of melamine formaldehyde resin. Stroke cure was measured for mixtures containing 100 parts of phenol formaldehyde resin and 50 parts of urea formaldehyde resin, 25 parts, 10 parts and 0 parts urea formaldehyde resin. Curing temperature was 135°C and various quantities of 25% ammonium chloride curing agent were used. The results are set out in figure 3. These show that urea formaldehyde is a satisfactory resin for use as an aminoplast to rapidly cure phenol formaldehyde resins in acid conditions.

**Claims**

1. A method for the continuous production of laminates comprising impregnating one or more base sheet materials with a mixture containing 20 to 55 parts by weight of one or more aminoplast resins to 100 parts by weight of one or more phenoplast resins in the presence of one or more acid donor curing agents in an amount of at least 1% by weight of the said mixture, impregnating one or more continuous decorative sheet materials with one or more aminoplast resins containing one or more acid donor curing agents, and pressing together the decorative and base sheet materials at an elevated curing temperature in order to rapidly cure the resins and form an integral laminate structure.

2. A method as claimed in claim 1 in which curing of the base sheet layer is effected at a pH of less than 5.

3. A method as claimed in claim 2 in which the pH is about 3.

4. A method as claimed in any preceding claim in which the acid donor curing agent is activable to release free acid at the elevated curing temperature.

5. A method as claimed in any one of claims 1 to 3, in which the curing agent is an acid salt of ammonia, an amine or a substituted amine.

6. A method as claimed in any one of claims 1 to 3 in which the curing agent is one or more of chloride, sulphate, acetate, formate and sulphonate of ammonium, triethanolamine, diethanolamine, monoethanolamine, morpholine, guanidine and melamine, or is benzoic acid or acetic acid; the phenoplast resin is the reaction product of formaldehyde and one or more of phenol, resorcinol, resol, xylenol and naphthol, and the said aminoplast resins, which may be the same or different, are reaction products of formaldehyde and one or more of melamine, urea, thiourea, ethylene urea, dicyanidiamine, benzoguanamine and acetoguanamine.

**Patentansprüche**

1. Verfahren zur kontinuierlichen Herstellung von Laminaten, umfassend das Imprägnieren eines oder mehrerer Basisblattmaterialien, mit einer Mischung, die 20 bis 55 Gewichtsteile eines oder mehrerer Amino-Plastharze zu 100 Gewichtsteilen eines oder mehrerer Phenoplast-Harze in Gegenwart eines oder mehrerer Säuredonator-Härtungsmittel in einer Menge von zumindest 1 Gew.-% besagter Mischung enthält, Imprägnieren eines oder mehrerer fortlaufender Dekorationsblattmaterialien mit einem oder mehreren Aminoplast-Harzen, die ein oder mehrere Säuredonator-Härtungsmittel enthalten, Zusammenpressen der Dekorationsblatt- und Basisblattmaterialien bei erhöhter Härtungstemperatur, um die Harze schnell zu härten und eine integrale Laminatstruktur zu bilden.

2. Verfahren nach Anspruch 1, wobei die Härtung der Basisblattschicht bei einem pH-Wert von weniger als 5 erfolgt.

3. Verfahren nach Anspruch 2, wobei der pH-Wert etwa 3 beträgt.

4. Verfahren nach einem der vorhergehenden Ansprüche, wobei das Säuredonator-Härtungsmittel aktivierbar ist, um freie Säure bei der erhöhten Härtungstemperatur freizusetzen.

5. Verfahren nach einem der Ansprüche 1 bis 3, wobei das Härtungsmittel ein saures Salz von Ammoniak, einem Amin oder einem substituierten Amin ist.

6. Verfahren nach einem der Ansprüche 1 bis 3, wobei das Härtungsmittel eines oder mehrere aus der Gruppe Chlorid, Sulfat, Acetat, Formiat und Sulfonat von Ammonium, Triethanolamin, Diethanolamin, Monoethanolamin, Morpholin, Guanidin und Melamin oder Benzoesäure oder Essigsäure, ist; das Phenoplast-Harz das Reaktionsprodukt von Formaldehyd und einem oder mehreren aus der Gruppe Phenol, Resorcin, Resol, Xylenol und Naphthol ist, und besagte Aminoplast-Harze, die gleich oder verschieden sein können, Reaktionsprodukte von Formaldehyd und einem oder mehreren aus der Gruppe Melamin, Harnstoff, Thioharnstoff, Ethylenharnstoff, Dicyandiamid, Bezoguanamin und Acetoguanamin sind.

**Revendications**

1. Procédé de fabrication en continu de stratifiés comprenant l'imprégnation d'un ou de plusieurs matériaux servant de feuille de base avec un mélange contenant de 20 à 50 parties en poids d'une ou plusieurs résine(s) aminoplaste(s) pour 100 parties en poids d'une ou plusieurs résine(s) phénoplaste(s) en présence d'un ou plusieurs agent(s) durcisseur(s) donneur(s) d'acide en une quantité d'au moins 1% en poids dudit mélange, l'imprégnation d'un ou de plusieurs matériaux continus servant de feuille décorative avec une ou plusieurs résine(s) aminoplaste(s) contenant un ou plusieurs agent(s) durcisseur(s) donneur(s) d'acide, et le pressage des matériaux servant de feuille décorative avec ceux servant de feuille de base à une température de durcissement élevée afin de durcir rapidement les résines et former une structure stratifiée intégrale.

2. Procédé selon la revendication 1 dans lequel le durcissement de la couche de feuille de base est effectué à un pH inférieur à 5.

3. Procédé selon la revendication 2 dans lequel le pH est d'environ 3.

4. Procédé selon l'une quelconque des revendications précédentes dans lequel l'agent durcisseur donneur d'acide est activable pour fournir de l'acide libre à la température de durcissement élevée.

5. Procédé selon l'une quelconque des revendications 1 à 3, dans lequel l'agent durcisseur est un sel acide d'ammoniac, d'une amine, ou d'une amine substituée.

6. Procédé selon l'une quelconque des revendications 1 à 3, dans lequel l'agent durcisseur est l'un ou plusieurs composés parmi le chlorure, le sulfate, l'acétate, le formiate et le sulfonate d'ammonium, de triéthanolamine, de diéthanolamine, de monoéthanolamine, de morpholine, de guanidine et de mélamine, ou est l'acide benzoïque ou l'acide acétique; la résine phénoplaste est le produit de réaction du formaldéhyde et d'un ou plusieurs parmi le phénol, résorcinol, résol, xylénol et naphtol, et lesdites résines aminoplastes, qui peuvent être les mêmes ou différentes, sont les produits de réaction du formaldéhyde et d'un ou plusieurs composés parmi la mélamine, l'urée, la thiourée, l'éthylène-urée, la dicyanodiamide, la benzoguanamine et l'acétoguanamine.

Fig 1

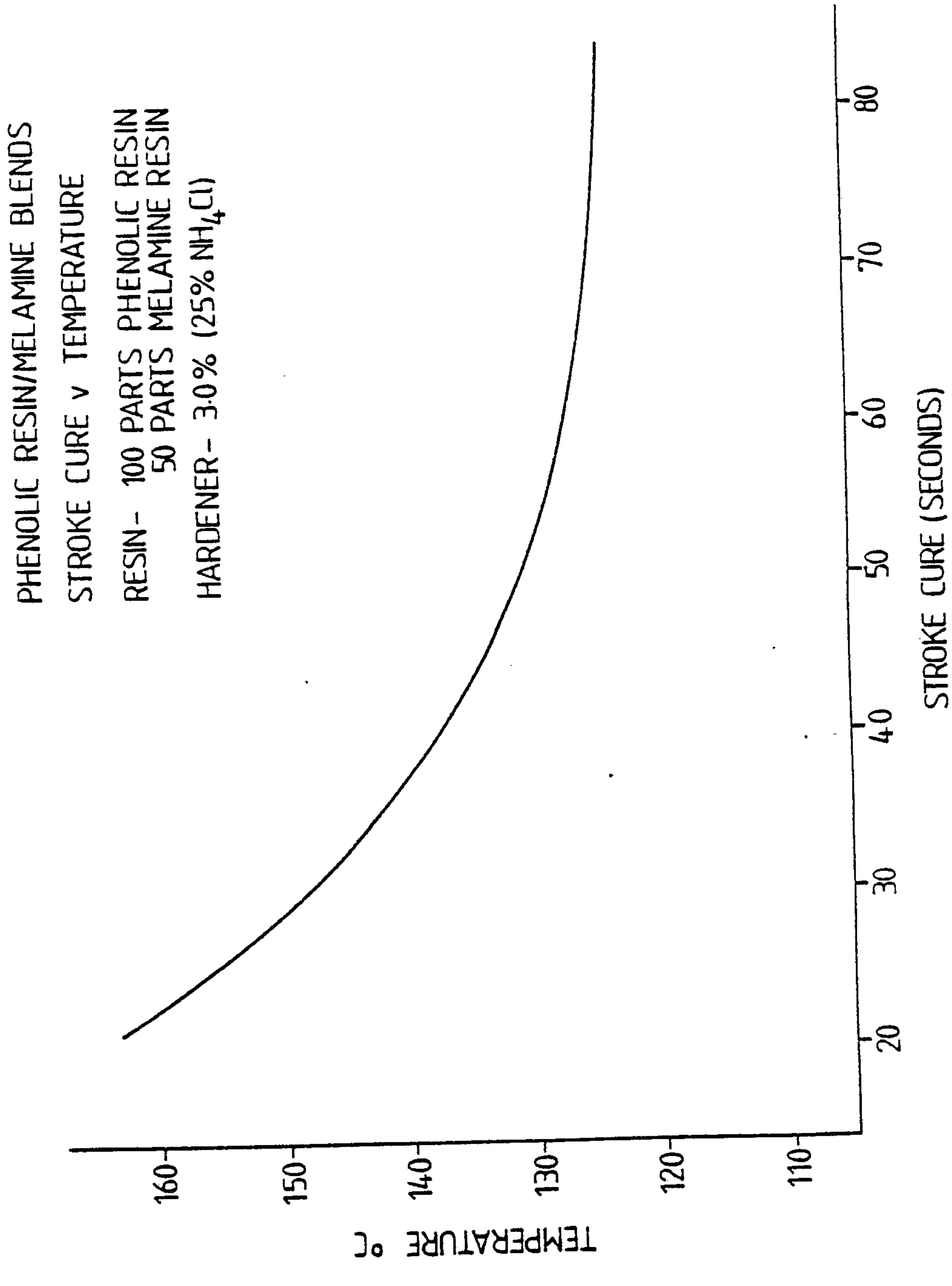
PHENOLIC RESIN/MELAMINE BLENDS
STROKE CURE v TEMPERATURE
RESIN- 100 PARTS PHENOLIC RESIN
50 PARTS MELAMINE RESIN
HARDENER- 3.0% (25% $NH_4Cl$)
TEMPERATURE °C
160
150
140
130
120
110
20
30
40
50
60
70
80
STROKE CURE (SECONDS)

Fig 2

PHENOLIC RESIN/MELAMINE RESIN BLENDS

STROKE CURE AT 135°C v % HARDENER
HARDENER- 25% SOLUTION OF AMMONIUM CHLORIDE

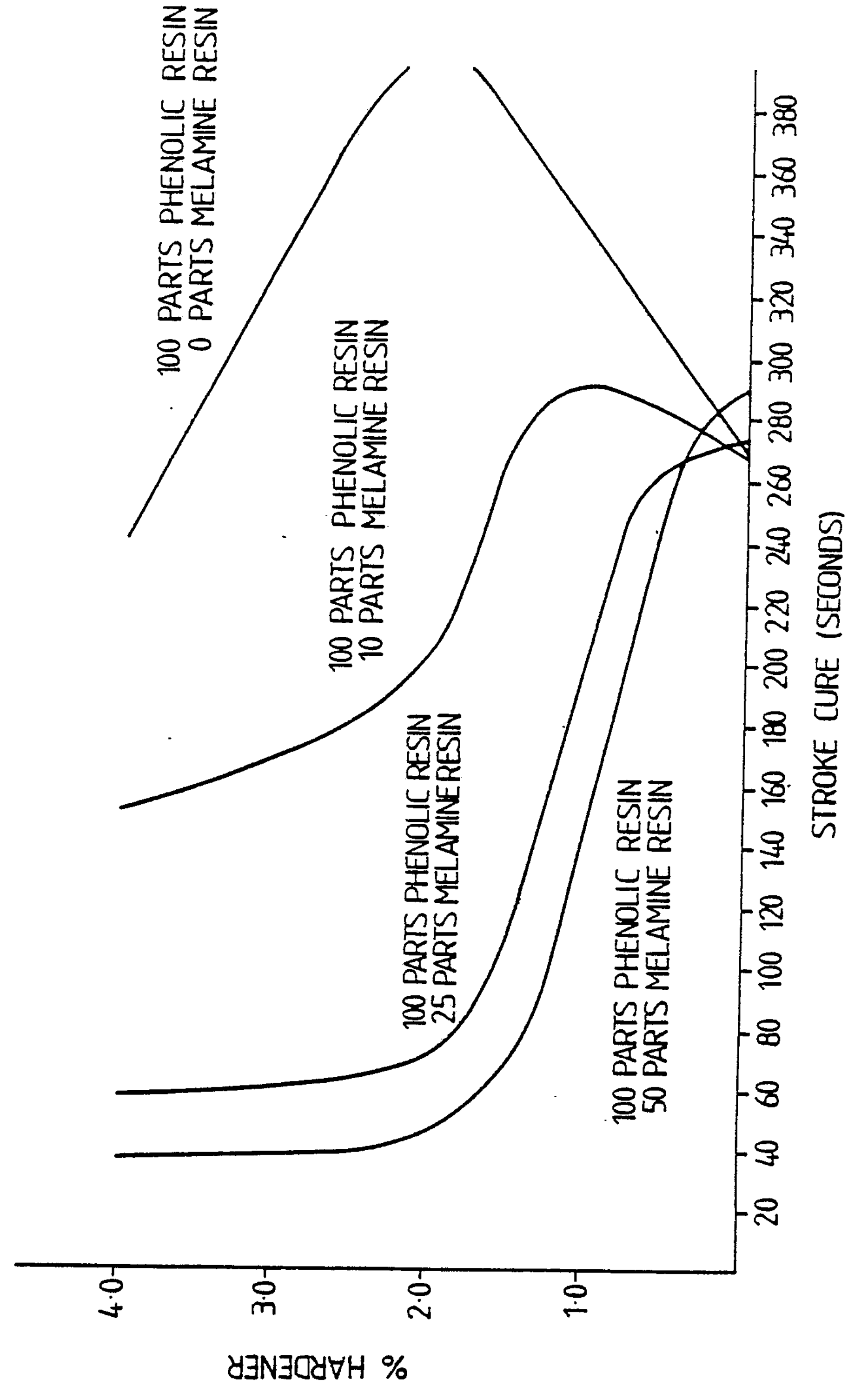

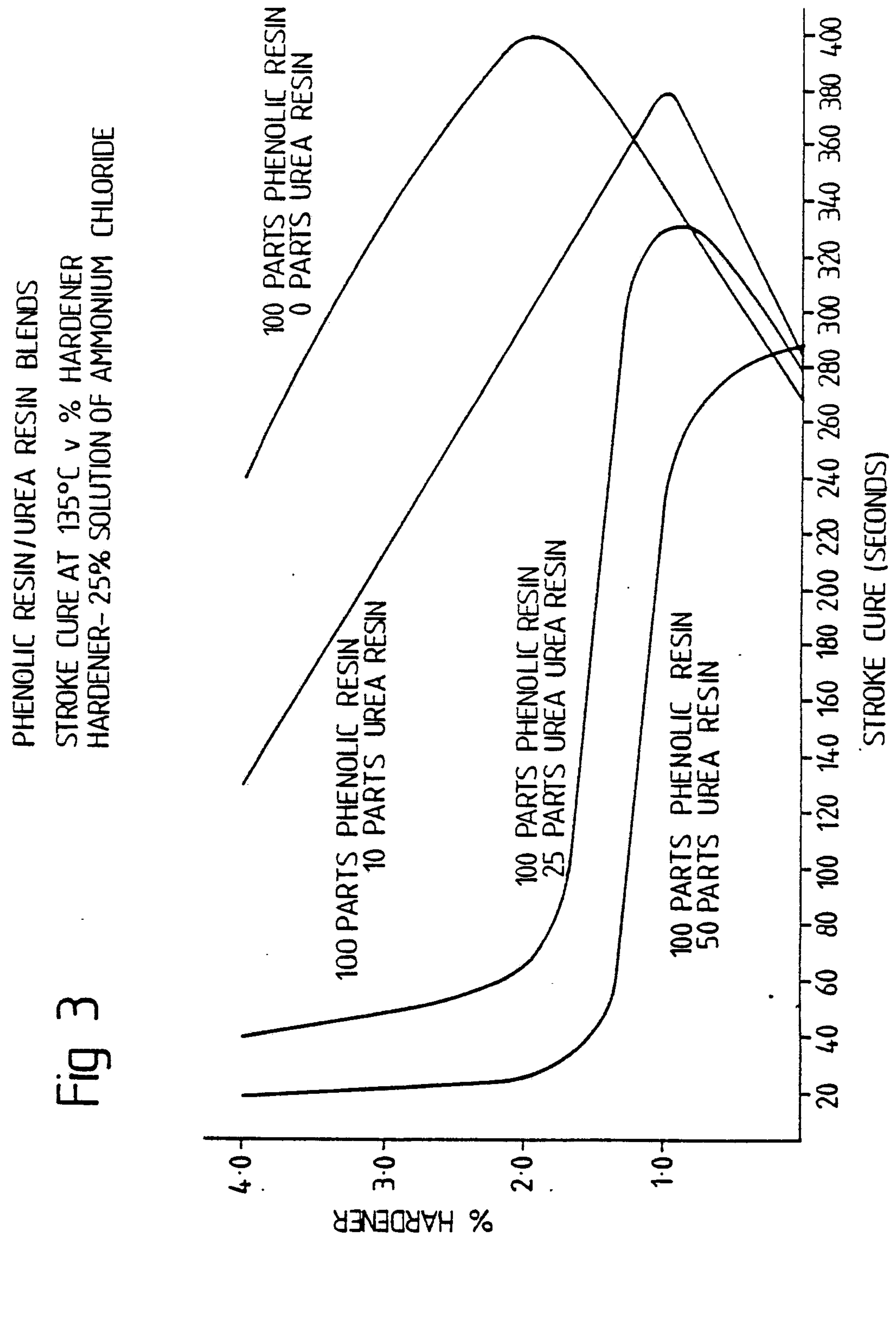
PHENOLIC RESIN/UREA RESIN BLENDS
STROKE CURE AT 135°C v % HARDENER
HARDENER- 25% SOLUTION OF AMMONIUM CHLORIDE
100 PARTS PHENOLIC RESIN
0 PARTS UREA RESIN
100 PARTS PHENOLIC RESIN
10 PARTS UREA RESIN
100 PARTS PHENOLIC RESIN
25 PARTS UREA UREA RESIN
100 PARTS PHENOLIC RESIN
50 PARTS UREA RESIN
% HARDENER
4·0
3·0
2·0
1·0
STROKE CURE (SECONDS)
20
40
60
80
100
120
140
160
180
200
220
240
260
280
300
320
340
360
380
400

Fig 3